# EUROPEAN PATENT APPLICATION

(11) **EP 3 689 153 A1**
(43) Date of publication of application: **05.08.2020**
(21) Application number: 18859211.7
(22) Date of filing: 25.09.2018
(51) Int. Cl.: A23L 2/00, A23L 2/52

(54) **COLORLESS TRANSPARENT BEVERAGE CONTAINING CALCIUM**

(30) Priority: 25.09.2017 JP 2017184232
(71) Applicant: Suntory Holdings Limited, Osaka-shi, Osaka 530-8203 (JP)
(72) Inventor: HOMBO, Mizuho, Kawasaki-shi Kanagawa 211-0067 (JP); YASUI, Yohei, Kawasaki-shi Kanagawa 211-0067 (JP); MITO, Mika, Kawasaki-shi Kanagawa 211-0067 (JP); IBUSUKI, Daigo, Kawasaki-shi Kanagawa 211-0067 (JP); TOMOKIYO, Takaya, Kawasaki-shi Kanagawa 211-0067 (JP)
(74) Representative: Vossius & Partner Patentanwälte Rechtsanwälte mbB
(86) International application number: PCT/JP2018/035289
(87) International publication number: WO 2019/059390

(57) **Abstract**

An object of the present invention is to reduce the sliminess coming from calcium felt upon drinking of a calcium-containing colorless transparent beverage with a pH of 4.0 or more.

At least one selected from the group consisting of vanillin, ethyl vanillin, maltol and ethyl maltol is added to a calcium-containing colorless transparent beverage with a pH of 4.0 or more.

## Description

### TECHNICAL FIELD

The present invention relates to calcium-containing colorless transparent beverages, and a method for producing the same.

### BACKGROUND ART

In recent years, flavored water has gained popularity against the backdrop of the rise in consumers' health consciousness and natural preference. Flavored water is a beverage with moderate sweetness produced by adding ingredients such as flavorant, extract, and/or fruit juice to water such as mineral water (including natural mineral water), and is a beverage with a water-like colorless transparent appearance, also called "near-water". Those beverages like flavored water, which are colorless and transparent but have a flavor of fruit or the like and moderate sweetness, generally have such a clean taste and refreshing flavor that one can drink them as an alternative to water, and are characterized by being as easy to drink as or easier to drink than water.

Meanwhile, it is known to be effective to drink a beverage containing a specified amount of minerals for the purpose of efficiently replenishing water and minerals lost from the human body by sweating during exercise or daily life activities.

It is known that since minerals have a peculiar taste, they may have an impact on the flavor of a beverage depending on the type of the beverage to which to add them. There have been reported methods for improving the taste of minerals, including such techniques as described in PTLs 1 to 5.

### CITATION LIST

### PATENT LITERATURES

PTL 1: Japanese Unexamined Patent Application Publication No. JP 2017-12004
PTL 2: Japanese Unexamined Patent Application Publication No. JP 2016-42812
PTL 3: Japanese Unexamined Patent Application Publication No. JP 2016-7149
PTL 4: Japanese Unexamined Patent Application Publication No. JP 2015-211651
PTL 5: Japanese Unexamined Patent Application Publication No. JP 2015-167523

### SUMMARY OF INVENTION

### TECHNICAL PROBLEM

Among minerals, calcium gives peculiar senses of sliminess and the like. However, it was found that when calcium is added to colorless transparent beverages with a pH of less than 4.0, little uncomfortable sliminess coming from calcium is felt. In contrast, it was also observed that there was a problem in that when calcium is added to colorless transparent beverages with a pH of 4.0 or more, the sliminess peculiar to calcium is prominently felt upon drinking. The reason for this may be because colorless transparent beverages with a pH of 4.0 or more are low in sourness, so that the sliminess peculiar to calcium is felt in the mouth more easily.

Therefore, an object of the present invention is to reduce the sliminess coming from calcium felt upon drinking of a calcium-containing colorless transparent beverage with a pH of 4.0 or more.

### SOLUTION TO PROBLEM

The present inventors have made intensive studies to achieve the aforementioned object, and as a result, found that it is beneficial to add at least one aroma component selected from the group consisting of vanillin, ethyl vanillin, maltol, and ethyl maltol, to a calcium-containing colorless transparent beverage with a pH of 4.0 or more. Thus, the inventors completed the present invention.

More specifically, the present invention is directed, but not limited, to the following.
[1] A beverage comprising calcium, and at least one selected from the group consisting of vanillin, ethyl vanillin, maltol, and ethyl maltol, wherein the beverage satisfies the following requirements (i) to (v):
   (i) an absorbance at a wavelength of 660 nm of 0.06 or less;
   (ii) a ΔE (color difference) value of 3.5 or less relative to pure water;
   (iii) a pH of 4.0 to 7.0;
   (iv) a calcium content of 1 to 50 mg/100 mL; and
   (v) at least any one of (a) to (d) as defined below should be satisfied:
      (a) a vanillin content of 5 to 300 ppb;
      (b) an ethyl vanillin content of 5 to 300 ppb;
      (c) a maltol content of 5 to 17000 ppb;
      (d) an ethyl maltol content of 5 to 20000 ppb.
[2] The beverage as set forth in [1], wherein the beverage has a degree of sweetness of 3 to 10.
[3] A method for producing a beverage comprising calcium and satisfying the following requirements (i) to (iv):
   (i) an absorbance at a wavelength of 660 nm of 0.06 or less;
   (ii) a ΔE (color difference) value of 3.5 or less relative to pure water;
   (iii) a pH of 4.0 to 7.0; and
   (iv) a calcium content of 1 to 50 mg/100 mL;
      the method comprising the step of adding at least one selected from the group consisting of vanillin, ethyl vanillin, maltol, and ethyl maltol to the beverage so as to ensure that at least any one of (a) to (d) as defined below can be satisfied:
      (a) a vanillin content in the beverage should be in the range of 5 to 300 ppb;
      (b) an ethyl vanillin content in the beverage should be in the range of 5 to 300 ppb;
      (c) a maltol content in the beverage should be in the range of 5 to 17000 ppb;
      (d) an ethyl maltol content in the beverage should be in the range of 5 to 20000 ppb.

### ADVANTAGEOUS EFFECTS OF INVENTION

The present invention can provide a calcium-containing colorless transparent beverage with a pH of 4.0 or more, which is characterized in that the sliminess coming from calcium felt upon drinking is reduced. This invention can also provide a colorless transparent beverage having reduced sliminess coming from calcium and maintaining a clean taste and a refreshing flavor. Additionally, the "sliminess" as referred to herein means a slimy feeling left in the mouth after drinking, and differs from "bitterness" and "astringency". The "sliminess coming from calcium" as referred to in this invention refers to the peculiar sliminess characteristic of calcium, and differs from those coming from other minerals.

### DESCRIPTION OF EMBODIMENTS

The following provides descriptions of the beverage and related method according to the present invention.

Unless otherwise specified, the "ppb" as used herein refers to ppb by weight/volume (w/v). All numerical ranges defined herein by upper and lower limits, *i.e*. defined as "lower limit to upper limit", include their lower and upper limits. For example, the range defined as "1 to 2" includes 1 and 2.

### (Calcium)

The beverage of the present invention comprises calcium. In this invention, calcium can be added to the beverage in the form of a salt that can be used in beverages and foods, or in the form of deep ocean water, seaweed extract, or the like which are rich in calcium. Examples of the salt that can be used to add calcium to the beverage of this invention include, but are not limited to, calcium pantothenate and calcium lactate.

The calcium content in the beverage of the present invention is in the range of 1 to 50 mg/100 mL, preferably 1 to 20 mg/100 mL, more preferably 2.5 to 17.5 mg/100 mL, still more preferably 5 to 15 mg/100 mL. When the calcium content in a colorless transparent beverage with a pH of 4.0 to 7.0 falls within the aforementioned range, sliminess is prominently felt upon drinking this beverage.

When calcium is used in the present invention in the form of a salt, the calcium content in the beverage can be calculated in terms of the content of its free form. Further, in the context of this invention, the calcium content or concentration in a beverage (sample solution) can be measured by a known procedure using an ICP optical emission spectrometer.

### (Vanillin, ethyl vanillin, maltol, ethyl maltol)

The beverage of the present invention comprises at least one selected from the group consisting of vanillin, ethyl vanillin, maltol, and ethyl maltol. Any two or three or all of these components may be present in the beverage. The origins of vanillin, ethyl vanillin, maltol, and ethyl maltol used in this invention are not limited. These components may be derived from natural ingredients such as plants or may be synthetic products.

The vanillin content in the beverage of the present invention is in the range of 5 to 300 ppb, preferably 7 to 250 ppb, more preferably 12 to 200 ppb. If the vanillin content in the beverage is less than 5 ppb, the sliminess coming from calcium tends to be not fully reduced. If the vanillin content exceeds 300 ppb, the favor peculiar to vanillin becomes excessively intense, so that the taste of the beverage itself may be deteriorated.

The ethyl vanillin content in the beverage of the present invention is 5 ppb or more, 7 ppb or more, 12 ppb or more, 15 ppb or more, 20 ppb or more, 25 ppb or more, 30 ppb or more, 35 ppb or more, 40 ppb or more, or 45 ppb or more. The upper limit of the ethyl vanillin content in the beverage of this invention is not particularly limited, but is preferably 300 ppb or less. The ethyl vanillin content is more preferably 275 ppb or less, 250 ppb or less, 225 ppb or less, or 200 ppb or less. If the ethyl vanillin content in the beverage is less than 5 ppb, the sliminess coming from calcium tends to be not fully reduced. If the ethyl vanillin content exceeds 300 ppb, the favor peculiar to ethyl vanillin becomes excessively intense, so that the taste of the beverage itself may be deteriorated. The ethyl vanillin content in the beverage of this invention is typically in the range of 5 to 300 ppb, 7 to 275 ppb, 12 to 250 ppb, 15 to 225 ppb, or 20 to 200 ppb.

The maltol content in the beverage of the present invention is 5 ppb or more, 10 ppb or more, 15 ppb or more, 20 ppb or more, 25 ppb or more, 30 ppb or more, 35 ppb or more, 40 ppb or more, 45 ppb or more, or 50 ppb or more. The upper limit of the maltol content in the beverage of this invention is not particularly limited, but is preferably 17000 ppb or less. The maltol content is more preferably 16500 ppb or less, 16000 ppb or less, 15500 ppb or less, 15000 ppb or less, 14500 ppb or less, 14000 ppb or less, 13500 ppb or less, or 13000 ppb or less. If the maltol content in the beverage is less than 5 ppb, the sliminess coming from calcium tends to be not fully reduced. If the maltol content exceeds 17000 ppb, the favor peculiar to maltol becomes excessively intense, so that the taste of the beverage itself may be deteriorated. The maltol content in the beverage of this invention is typically in the range of 5 to 17000 ppb, 10 to 16500 ppb, 15 to 16000 ppb, 20 to 15500 ppb, or 25 to 15000 ppb.

The ethyl maltol content in the beverage of the present invention is 5 ppb or more, 10 ppb or more, 15 ppb or more, 20 ppb or more, 25 ppb or more, 30 ppb or more, 35 ppb or more, 40 ppb or more, 45 ppb or more, or 50 ppb or more. The upper limit of the ethyl maltol content in the beverage of this invention is not particularly limited, but is preferably 20000 ppb or less. The ethyl maltol content is more preferably 19500 ppb or less, 19000 ppb or less, 18500 ppb or less, 18000 ppb or less, 17500 ppb or less, 17000 ppb or less, 16500 ppb or less, or 16000 ppb or less. If the ethyl maltol content in the beverage is less than 5 ppb, the sliminess coming from calcium tends to be not fully reduced. If the ethyl maltol content exceeds 20000 ppb, the favor peculiar to ethyl maltol becomes excessively intense, so that the taste of the beverage itself may be deteriorated. The ethyl maltol content in the beverage of this invention is typically in the range of 5 to 20000 ppb, 10 to 19500 ppb, 15 to 19000 ppb, 20 to 18500 ppb, or 25 to 18000 ppb.

In the context of the present invention, the contents or concentrations of vanillin, ethyl vanillin, maltol and ethyl maltol in a beverage (sample solution) are measured by the procedure described below.

A sample solution is filtrated through a PTFE filter (produced by Toyo Roshi Kaisha, Ltd.; ADVANTEC DISMIC-25HP 25HP020AN; pore size 0.20 µm; diameter 25 mm) which has been washed beforehand with distilled water, and the filtrate is subjected to LC/MS analysis. Quantitative values are calculated by the standard addition method. The conditions for LC/MS analysis are as follows.

**(LC analysis conditions)**

| | |
|---|---|
| HPLC system: | Agilent 1290 Series (produced by Agilent Technologies) |
| Feed pump: | G4220A |
| Autosampler: | G4226A (with G1330B thermostat) |
| Column oven: | G1316C |
| Column: | Cortecs UPLC T3 (particle size 1.6 µm; 2.1 mm ID × 150 mm; produced by Waters) |
| Mobile phase A: | 0.1% formic acid in water |
| Mobile phase B: | Acetonitrile |
| Flow rate: | 0.4 mL/min. |
| Concentration gradient condition: | 0.0 to 1.0 min. (5% B) → 7.5 min. (100% B), followed by equilibration for 4.5 min. with an initial mobile phase |
| Column temperature: | 40°C |
| Sample injection: | Injection volume 2.0 µL |
| Sample introduction into mass spectrometer: | 1.5 to 10 min. |

**(Mass spectroscopy conditions)**

| | |
|---|---|
| Mass spectrometer: | Q Exactive (produced by Thermo Fisher Scientific) |
| Ionization mode: | APCI, positive mode |
| Ionizer conditions: | |
| Sheath gas flow rate: | 30 |
| Aux gas flow rate: | 5 |
| Sweep gas flow rate: | 0 |
| Capillary temp: | 300°C |
| Spray discharge current: | 4 µA |
| Probe heater temp: | 300°C |
| Detection conditions: | |
| Resolution: | 140000 |
| AGC Target: | 3e6 |
| Maximum IT: | 100 ms |
| Scan Range: | 100 to 1500 m/z |
| Quantitative ions: | |
| Vanillin: | m/z = 153.05462 |
| Ethyl vanillin: | m/z = 167.07027 |
| Maltol: | m/z = 127.03897 |
| Ethyl maltol: | m/z = 141.05462 |

### (Colorless transparent beverage)

The beverage of the present invention is colorless. The colorless appearance of the beverage can be defined by a ΔE (color difference) value of transmitted light as measured relative to pure water using a colorimetric color difference meter (*e.g*., ZE 2000 (produced by Nippon Denshoku Industries Co., Ltd.)). To be specific, the ΔE value of the beverage of this invention as measured relative to pure water is 3.5 or less. The ΔE value is preferably 2.3 or less.

Also, the beverage of the present invention is transparent. By stating that "the beverage is transparent", it is meant that the beverage is not white turbid like so-called sports drinks nor cloudy like cloudy fruit juices, and is visually transparent like water. The transparency of the beverage can be converted to numerical data using a known technique for measuring liquid turbidity. For example, the transparency of the beverage can be defined by absorbance at a wavelength of 660 nm as measured using an ultraviolet visible spectrophotometer (e.g., UV-1600 (produced by Shimadzu Corporation)). To be specific, the beverage of this invention has an absorbance at a wavelength of 660 nm of 0.06 or less.

### (pH)

The beverage of the present invention has a pH of 4.0 to 7.0. When the pH of the colorless transparent beverage falls within the aforementioned range, the sliminess coming from calcium is prominently felt during drinking. The effect of vanillin, ethyl vanillin, maltol, or ethyl maltol to reduce the sliminess coming from calcium is particularly beneficial when the pH of the beverage falls within the aforementioned range. The beverage of this invention may also have a pH of 4.3 to 6.5, 4.5 to 6.2, or 4.7 to 5.9.

### (Acidulant)

The beverage of the present invention may contain an acidulant. The pH of the beverage of this invention can be adjusted by adding an acidulant. The type of an acidulant used in this invention is not particularly limited, and typical examples of the acidulant include citric acid, malic acid, lactic acid, phosphoric acid, tartaric acid, gluconic acid, and salts thereof. In particular, citric acid, malic acid, phosphoric acid, and salts thereof are preferred. The beverage of this invention may contain a single type of acidulant or two or more types of acidulants. The term "acidulant" as used herein in relation to this invention encompasses not only food additives but also acids derived from fruit juice. To be specific, if the beverage contains a fruit juice which contains such an acid as listed above, said acid is regarded as an acidulant.

### (Degree of sweetness)

The beverage of the present invention can have moderate sweetness. The degree of sweetness of the beverage of this invention is not particularly limited, but is for example in the range of 3 to 10, preferably 3 to 9, more preferably 3 to 8, still more preferably 3 to 7.

The "degree of sweetness", as referred to herein, is an index that indicates the sweetness of a beverage as determined based on the sweetness of 100 g of a beverage containing 1 g of sucrose, which is taken as "1". The degree of sweetness of the beverage is determined by converting the content of each sweetness component into a sucrose equivalent based on the relative ratio of the sweetness of each sweetness component to that of sucrose, which is taken as 1, and then by totaling the sucrose sweetness equivalents of all sweetness components (including sweetness components derived from fruit juice, extract, etc.) contained in the beverage. The relative ratios of the sweetness of different representative sweetness components to that of sucrose, which is taken as 1, are listed in Table 1. With regard to other sweetness components not listed in Table 1, the degrees of sweetness presented by manufacturers who produce or sell those other sweetness components can be used, or the degrees of sweetness can be determined by sensory evaluation.

**[Table 1]**

| Sweetness component | Degree of sweetness |
|---|---|
| | |
| Sucrose | 1 |
| Glucose | 0.6 |
| Fructose | 1.2 |
| HFCS (with 55% fructose) | 1 |
| Lactose | 0.3 |
| Trehalose | 0.4 |
| D-psicose | 0.7 |
| Maltose | 0.4 |
| Sorbitol | 0.6 |
| Mannitol | 0.6 |
| Maltitol | 0.8 |
| Xylitol | 0.6 |
| Reduced palatinose | 0.45 |
| Erythritol | 0.8 |
| Lactitol | 0.8 |
| Saccharified reduced starch | 0.1 |
| Stevia | 100 |
| Glycyrrhizin | 50 |
| Thaumatin | 2000 |
| Saccharin | 200 |
| Aspartame | 100 |
| Acesulfame potassium | 200 |
| Sucralose | 600 |
| Alitame | 2000 |
| Cyclamate | 30 |
| Dulcin | 200 |
| Neotame | 1000 |
| Neohesperidin | 1000 |
| Monellin | 25000 |
| Lysozyme | 20 |

In the present invention, the degree of sweetness of the beverage can be adjusted using a sweetness component(s). For example, the sweetness components listed in Table 1 can be used, but other sweetness components may also be used. Preferred sweetness components are fructose, sugar, high-fructose corn syrup (with 55% fructose), glucose, sucrose, and lactose, with sucrose being a particularly preferred sweetness component. It is better not to use a high-intensity sweetener in the beverage of this invention, since the effect of this invention is easier to perceive. As referred to herein, the high-intensity sweetener refers to an artificial or natural sweetener having a degree of sweetness of 10 or more times as high as sucrose. In this invention, such a sweetness component may be directly added as a sweetener to the beverage, or a fruit juice, extract or the like containing such a sweetness component may be added to the beverage.

### (Tannin)

The tannin content in the beverage of the present invention is not particularly limited, but is preferably 150 ppm or less, since tannin, when present in large amounts, tends to cause coloration of a beverage. If the tannin content in the beverage exceeds 150 ppm, the beverage may be colored so that it may not be kept colorless and transparent. Since tannin has a peculiar astringent taste, it may impair the palatability of a beverage when it is present in the beverage in large amounts.

### (Caffeine)

The beverage of the present invention preferably contains caffeine. The preferred concentration of caffeine in the beverage is in the range of 100 to 200 ppm. With the aid of the stimulus generated by a moderate concentration of caffeine, the effect of this invention can be perceived more prominently. However, if the caffeine concentration exceeds 200 ppm, the palatability of the beverage may be impaired due to the bitterness of caffeine.

### (Other components)

In addition to the different components described hereinabove, various additives used in common beverages, such as flavorant, sugar, enrichment (e.g., vitamin), antioxidant, emulsifier, preservative, extract, dietary fiber, pH adjustor, and quality stabilizer, can be added to the beverage of the present invention, to the extent that such additives do not impair the effect of the present invention. In particular, since the beverage of this invention is characterized by being colorless and transparent, there is a significant limitation on the amount added of an extract, fruit juice, etc. Thus, in order to compensate for this limitation, it is preferred to add a flavorant. Preferred flavorants include tea flavor, coffee flavor, and milk flavor.

### (Beverage)

The type of the beverage of the present invention is not particularly limited as long as the beverage is a colorless transparent beverage contemplated by this invention, or namely a soft drink. The inventive beverage can be of any type, including nutritional beverage, functional beverage, flavored water (near water) beverage, tea beverage (e.g., black tea, oolong tea), coffee beverage, or carbonated beverage, with flavored water being preferred. In one embodiment, the beverage is preferably a tea-flavored beverage, more preferably a black tea-flavored beverage, particularly preferably a milky tea-flavored beverage. In another embodiment, the beverage is preferably a coffee-flavored beverage, more preferably a milky coffee-flavored beverage. In contrast, alcoholic beverages with an alcohol content of 1% or more are not preferred, since the effect of this invention may be impeded by an alcohol contained in the beverage.

The beverage of the present invention is preferably a packaged beverage which is packed in a package. The package used is not particularly limited, and exemplary packages include PET bottle, aluminum can, steel can, carton, cup for chilled drink, and glass bottle. *Inter alia,* it is preferred to use a colorless transparent package such as PET bottle, since one can see the characteristic colorless transparent appearance of the beverage of this invention while the beverage is packed in such a package. When heat sterilization is performed, the method of heat sterilization is not particularly limited. Heat sterilization can be performed using a common method such as UHT sterilization or retort sterilization. The temperature conditions for heat sterilization process are not particularly limited, and are, for example, 65 to 130°C, preferably 85 to 120°C, for 10 to 40 minutes. However, any other sterilization process may also be performed at an appropriate temperature for several seconds, such as 5 to 30 seconds, as long as such a process can achieve a comparable sterilizing value to that process under the aforementioned conditions.

### (Method)

In another aspect, the present invention is directed to a method for producing a beverage comprising calcium and satisfying the following requirements (i) to (iv):
(i) an absorbance at a wavelength of 660 nm of 0.06 or less;
(ii) a ΔE (color difference) value of 3.5 or less relative to pure water;
(iii) a pH of 4.0 to 7.0; and
(iv) a calcium content of 1 to 50 mg/100 mL.

This method comprises the step of adding at least one selected from the group consisting of vanillin, ethyl vanillin, maltol, and ethyl maltol to the beverage so as to ensure that at least any one of (a) to (d) as defined below can be satisfied:
(a) a vanillin content in the beverage should be in the range of 5 to 300 ppb;
(b) an ethyl vanillin content in the beverage should be in the range of 5 to 300 ppb;
(c) a maltol content in the beverage should be in the range of 5 to 17000 ppb;
(d) an ethyl maltol content in the beverage should be in the range of 5 to 20000 ppb.

Further, since this method can reduce the sliminess coming from calcium felt upon drinking of the beverage, the present invention is also directed to a method for reducing the sliminess coming from calcium in the beverage.

The types and contents of the components contained in the beverage, the absorbance, color difference, pH and degree of sweetness of the beverage, and preferred ranges thereof, as well as the adjustment procedures thereof are as described above in relation to the beverage of this invention or are obvious from the descriptions given above. The timings of different steps are not limited. For example, the aforementioned step can be performed simultaneously with, or separately from, other steps such as absorbance adjustment step, color difference adjustment step, pH adjustment step, degree of sweetness adjustment step, and calcium content adjustment step, or all those steps can be performed in random order. Any procedure can be adopted as long as the beverage finally obtained satisfies the aforementioned requirements.

### EXAMPLES

Hereunder, the present invention will be described by way of working examples, but this invention is not limited to these examples.

### (Test Example 1)

The effects of vanillin were tested. To be specific, different beverages were prepared by mixing water with different ingredients in different amounts as indicated in the table given below. The degree of sweetness of the beverages was adjusted with sugar, and the pH of the beverages was adjusted to different values as indicated in the table below, with the use of phosphoric acid and trisodium citrate. However, the degree of sweetness of Trial Product 16 was reduced with the use of a reduced amount of sugar, and no phosphoric acid nor trisodium citrate were used in Trial Product 17. The prepared beverages were measured for their absorbance at a wavelength of 660 nm using a spectrophotometer (UV-1600 (produced by Shimadzu Corporation)), and also measured for their ΔE of transmitted light relative to pure water using a colorimetric color difference meter (ZE 2000 (produced by Nippon Denshoku Industries Co., Ltd.)). All of the prepared beverages showed an absorbance of 0.06 or less and a ΔE value of transmitted light of 3.5 or less as measured relative to pure water.

The different beverages were rated by 3 panelists on whether the sliminess coming from calcium was felt upon drinking. To be specific, the beverages were rated on a six-grade scale from 1 to 6, with "1" being "sliminess coming from calcium is strongly felt", and "6" being "no sliminess is felt". More specifically, the following evaluation criteria were adopted.
6 points: No sliminess is felt
5 points: Little sliminess is felt
4 points: Sliminess is slightly felt
3 points: Sliminess is somewhat felt
2 points: Sliminess is noticeably felt
1 point: Sliminess is strongly felt
The beverages rated as 1 or 2 points were regarded as not maintaining a clean taste or refreshing flavor characteristic of flavored water, and those rated as 3 to 6 points were regarded as maintaining a clean taste or refreshing flavor characteristic of flavored water. The averages of their ratings are shown in the table given below. Before the sensory evaluation, the panelists had confirmed the relationship between the different intensities of sliminess and their corresponding ratings using samples serving as standards for evaluation, so as to ensure that their ratings were standardized as much as possible.

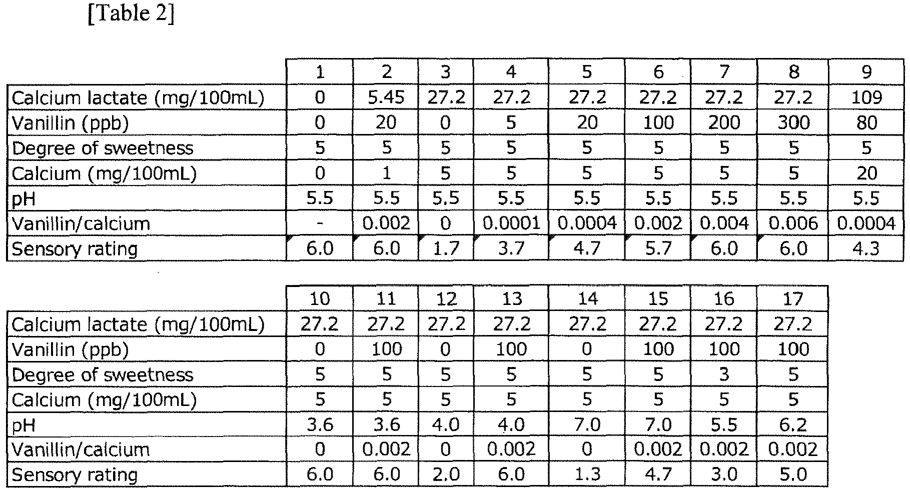

As evident from the table given above, vanillin functioned to reduce the sliminess coming from calcium. Also, particularly superior effect was observed when the content of vanillin fell within the particular range. From the results obtained for Trial Products 10 and 12, it was confirmed that when the pH of the beverage is 4.0 or more, the sliminess coming from calcium is prominently felt, but vanillin effectively exhibits an ability to reduce sliminess.

### (Test Example 2)

The effects of ethyl vanillin were tested. To be specific, different beverages were prepared by mixing water with different ingredients in different amounts as indicated in the table given below. The degree of sweetness of the beverages was adjusted with sugar, and the pH of the beverages was adjusted to different values as indicated in the table below, with the use of phosphoric acid and trisodium citrate. However, the degree of sweetness of Trial Product 33 was reduced with the use of a reduced amount of sugar, and no phosphoric acid nor trisodium citrate were used in Trial Product 34. The prepared beverages were measured for their absorbance at a wavelength of 660 nm using a spectrophotometer (UV-1600 (produced by Shimadzu Corporation)), and also measured for their ΔE of transmitted light relative to pure water using a colorimetric color difference meter (ZE 2000 (produced by Nippon Denshoku Industries Co., Ltd.)). All of the prepared beverages showed an absorbance of 0.06 or less and a ΔE value of transmitted light of 3.5 or less as measured relative to pure water. The prepared beverages were subjected to sensory testing by following the same procedure as in Test Example 1. The results of the sensory testing are also shown in the table given below.

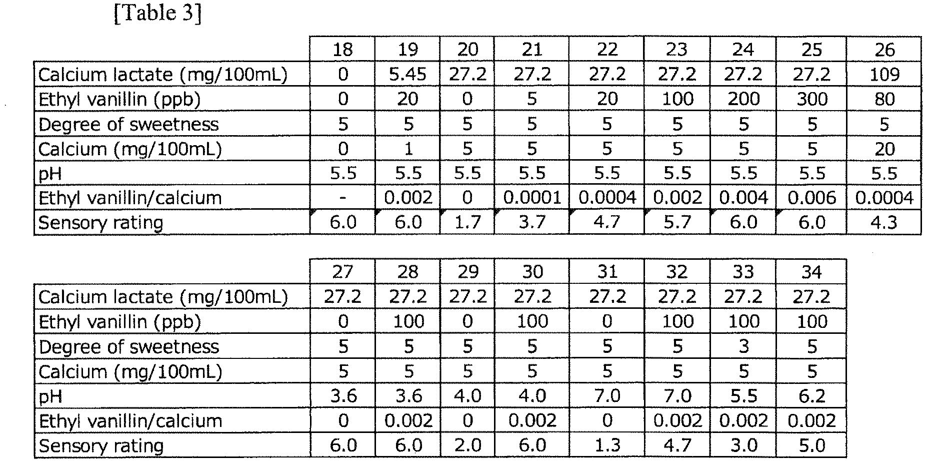

As evident from the table given above, ethyl vanillin functioned to reduce the sliminess coming from calcium. Also, particularly superior effect was observed when the content of ethyl vanillin fell within the particular range. It was confirmed that when the pH of the beverage is 4.0 or more, the sliminess coming from calcium is prominently felt, but ethyl vanillin effectively exhibits an ability to reduce sliminess.

### (Test Example 3)

The effects of maltol were tested. To be specific, different beverages were prepared by mixing water with different ingredients in different amounts as indicated in the table given below. The degree of sweetness of the beverages was adjusted with sugar, and the pH of the beverages was adjusted to different values as indicated in the table below, with the use of phosphoric acid and trisodium citrate. However, the degree of sweetness of Trial Product 51 was reduced with the use of a reduced amount of sugar, and no phosphoric acid nor trisodium citrate were used in Trial Product 52. The prepared beverages were measured for their absorbance at a wavelength of 660 nm using a spectrophotometer (UV-1600 (produced by Shimadzu Corporation)), and also measured for their ΔE of transmitted light relative to pure water using a colorimetric color difference meter (ZE 2000 (produced by Nippon Denshoku Industries Co., Ltd.)). All of the prepared beverages showed an absorbance of 0.06 or less and a ΔE value of transmitted light of 3.5 or less as measured relative to pure water. The prepared beverages were subjected to sensory testing by following the same procedure as in Test Example 1. The results of the sensory testing are also shown in the table given below.

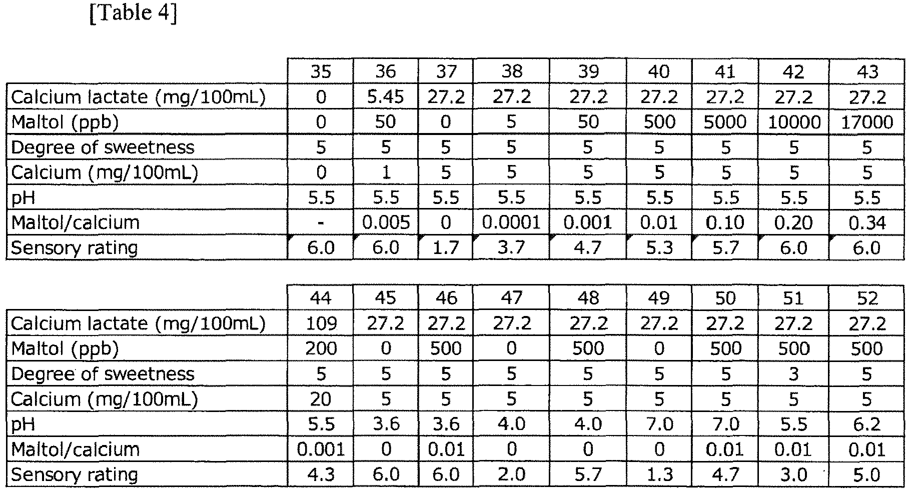

As evident from the table given above, maltol functioned to reduce the sliminess coming from calcium. Also, particularly superior effect was observed when the content of maltol fell within the particular range. It was confirmed that when the pH of the beverage is 4.0 or more, the sliminess coming from calcium is prominently felt, but maltol effectively exhibits an ability to reduce sliminess.

### (Test Example 4)

The effects of ethyl maltol were tested. To be specific, different beverages were prepared by mixing water with different ingredients in different amounts as indicated in the table given below. The degree of sweetness of the beverages was adjusted with sugar, and the pH of the beverages was adjusted to different values as indicated in the table below, with the use of phosphoric acid and trisodium citrate. However, the degree of sweetness of Trial Product 69 was reduced with the use of a reduced amount of sugar, and no phosphoric acid nor trisodium citrate were used in Trial Product 70. The prepared beverages were measured for their absorbance at a wavelength of 660 nm using a spectrophotometer (UV-1600 (produced by Shimadzu Corporation)), and also measured for their ΔE of transmitted light relative to pure water using a colorimetric color difference meter (ZE 2000 (produced by Nippon Denshoku Industries Co., Ltd.)). All of the prepared beverages showed an absorbance of 0.06 or less and a ΔE value of transmitted light of 3.5 or less as measured relative to pure water. The prepared beverages were subjected to sensory testing by following the same procedure as in Test Example 1. The results of the sensory testing are also shown in the table given below.

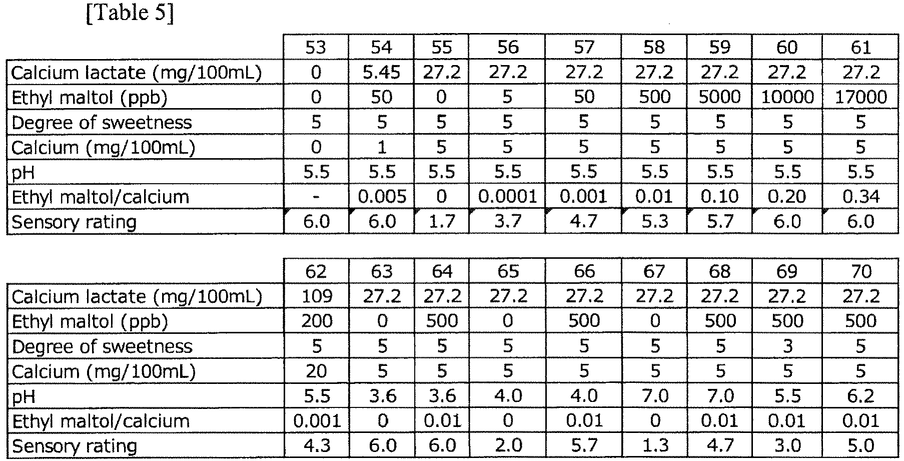

As evident from the table given above, ethyl maltol functioned to reduce the sliminess coming from calcium. Also, particularly superior effect was observed when the content of ethyl maltol fell within the particular range. It was confirmed that when the pH of the beverage is 4.0 or more, the sliminess coming from calcium is prominently felt, but ethyl maltol effectively exhibits an ability to reduce sliminess.

## Claims

1. A beverage comprising calcium, and at least one selected from the group consisting of vanillin, ethyl vanillin, maltol, and ethyl maltol, wherein the beverage satisfies the following requirements (i) to (v):
(i) an absorbance at a wavelength of 660 nm of 0.06 or less;
(ii) a ΔE (color difference) value of 3.5 or less relative to pure water;
(iii) a pH of 4.0 to 7.0;
(iv) a calcium content of 1 to 50 mg/100 mL; and
(v) at least any one of (a) to (d) as defined below should be satisfied:
(a) a vanillin content of 5 to 300 ppb;
(b) an ethyl vanillin content of 5 to 300 ppb;
(c) a maltol content of 5 to 17000 ppb;
(d) an ethyl maltol content of 5 to 20000 ppb.

2. The beverage according to claim 1, wherein the beverage has a degree of sweetness of 3 to 10.

3. A method for producing a beverage comprising calcium and satisfying the following requirements (i) to (iv):
(i) an absorbance at a wavelength of 660 nm of 0.06 or less;
(ii) a ΔE (color difference) value of 3.5 or less relative to pure water;
(iii) a pH of 4.0 to 7.0; and
(iv) a calcium content of 1 to 50 mg/100 mL;
the method comprising the step of adding at least one selected from the group consisting of vanillin, ethyl vanillin, maltol, and ethyl maltol to the beverage so as to ensure that at least any one of (a) to (d) as defined below can be satisfied:
(a) a vanillin content in the beverage should be in the range of 5 to 300 ppb;
(b) an ethyl vanillin content in the beverage should be in the range of 5 to 300 ppb;
(c) a maltol content in the beverage should be in the range of 5 to 17000 ppb;
(d) an ethyl maltol content in the beverage should be in the range of 5 to 20000 ppb.
